(19) **Europäisches Patentamt**
**European Patent Office**
**Office européen des brevets**

(11) **EP 2 764 212 B1**

(12) **FASCICULE DE BREVET EUROPEEN**

(45) Date de publication et mention
de la délivrance du brevet:
**29.11.2017 Bulletin 2017/48**

(21) Numéro de dépôt: **12781370.7**

(22) Date de dépôt: **08.10.2012**

(51) Int Cl.:
*F01D 5/14* (2006.01)          *F01D 5/34* (2006.01)
*F04D 29/32* (2006.01)

(86) Numéro de dépôt international:
**PCT/FR2012/052280**

(87) Numéro de publication internationale:
**WO 2013/050724 (11.04.2013 Gazette 2013/15)**

(54) **DISQUE AUBAGE MONOBLOC POURVU D'AUBES A PROFIL DE PIED ADAPTE**

EINTEILIGE BLISK MIT SCHAUFELN MIT GEEIGNETEM FUSSPROFIL

ONE-PIECE BLISK COMPRISING BLADES HAVING A SUITABLE ROOT PROFILE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.10.2011 FR 1159083**

(43) Date de publication de la demande:
**13.08.2014 Bulletin 2014/33**

(73) Titulaire: **SNECMA**
**75015 Paris (FR)**

(72) Inventeurs:
• **MERVILLE, Didier**
**F-77550 Moissy-Cramayel Cedex (FR)**
• **GALONS, Lucie**
**F-77550 Moissy-Cramayel Cedex (FR)**
• **PERROT, Vincent**
**F-77550 Moissy-Cramayel Cedex (FR)**
• **REISS, Hanna**
**F-77550 Moissy-Cramayel Cedex (FR)**

(74) Mandataire: **Ilgart, Jean-Christophe**
**BREVALEX**
**95, rue d'Amsterdam**
**75378 Paris Cedex 8 (FR)**

(56) Documents cités:
**EP-A1- 1 505 302          EP-A2- 1 939 398
US-A- 5 167 489          US-A- 6 071 077
US-A1- 2010 054 946**

**Description**

Le sujet de l'invention est un disque aubagé monobloc dont les aubes ont un profil de pied adapté.

De tels disques, abrégés souvent en « DAM », ou « blisk » en anglais, comprennent un cercle d'aubes d'un seul tenant avec un noyau de rotor et sont maintenant d'un emploi courant dans les turbomachines de moteurs d'avions, concurremment aux étages d'aubes classiques où les aubes sont fabriquées séparément du rotor et assemblées à lui par une imbrication de leurs pieds dans des rainures entaillant la surface de celui-ci.

Il existe de très nombreux profils d'aubes, conçus pour donner de bonnes performances aérodynamiques ou une bonne tenue mécanique de résistance aux efforts ou aux vibrations. Les exemples existants ne sont toutefois pas forcément applicables à des disques aubagés monobloc, qui sont sujets à des contraintes particulières notamment du fait de la transmission intégrale et immédiate des contraintes entre le moyeu et les aubes ; cette remarque est d'autant plus valable que le moteur auquel appartient le disque aura une forte poussée.

L'invention a pour objet l'amélioration des disques aubagés monobloc en ce qui concerne la résistance aux efforts statiques et vibratoires, aux chocs à l'occasion d'ingestion de corps solides dans le moteur, et l'uniformité de répartition de l'écoulement des gaz sur la hauteur des aubes. Elle est particulièrement appréciable pour des moteurs travaillant dans des conditions intenses telles qu'un vol supersonique avec un nombre de Mach de par exemple 1,45 à l'entrée du moteur, une forte poussée commandant un rapport de moyeu, égal au rayon du moyeu sur le rayon externe du disque, de 0,4 par exemple et un faible allongement défini par le rapport hauteur sur corde, pouvant être égal à 1,75.

Les documents US 2010/0054946 A et EP 1 505 302 A décrivent des aubes ayant des angles de flèche ou de dièdre croissant continûment en direction du moyeu dans une zone de pied de l'aube, mais souvent sur une faible hauteur de cette zone de pied, et les valeurs d'accroissement sont en général très faibles, trop faibles pour avoir un effet perceptible. Ces documents antérieurs s'intéressent en vérité plutôt aux caractéristiques des aubes à leur portion extérieure, opposée à la zone de pied à laquelle ils accordent très peu d'attention.

Sous une forme générale, l'invention est caractérisée en ce que les bords d'attaque des aubes ont, dans une zone de pied adjacente au moyeu, un angle de dièdre et un angle de flèche ayant des valeurs croissant continûment toutes deux d'au moins 10° en s'approchant du moyeu. Il a été constaté que cette disposition améliorait l'aube pour les performances aérodynamiques et sa résistance mécanique. L'évolution de l'angle de flèche a un effet plus prononcé sur la première caractéristique et l'angle de dièdre sur la seconde, mais sans qu'on puisse les dissocier vraiment.

La zone de pied s'étend sur environ 20% à 30% de la hauteur de l'aube.

Des formes préférées de l'invention possèdent des caractéristiques secondaires qu'on va détailler ci-dessous, dont l'effet est généralement de renforcer l'effet principal de l'angle mentionné.

L'angle de flèche et l'angle de dièdre ont des valeurs décroissant continûment dans une zone médiane adjacente à la zone de pied.

L'angle de dièdre est toujours négatif, sauf à une portion de la zone de pied qui est la plus proche du moyeu.

L'angle de flèche a des valeurs toujours positives dans une zone médiane de l'aube adjacente à la zone de pied quoique décroissantes vers la zone de pied, et a des valeurs supérieures à toutes celles de la zone médiane dans une portion de la zone de pied qui est la plus proche du moyeu.

Dans ce cas, l'angle de flèche atteint favorablement une valeur maximale d'au moins deux fois les valeurs dans la portion médiane au raccordement au moyeu, qui peut être de 20° au moins.

La portion de la zone de pied pour laquelle l'angle de dièdre est positif s'étend sur environ 5% à 10% de la hauteur de l'aube, tandis que la portion précédemment définie à propos de l'angle de flèche s'étend sur environ 10% à 20% de la hauteur de l'aube.

L'invention concerne aussi une turbomachine comprenant ce disque aubagé monobloc, notamment comme soufflante de compresseur située tout en amont d'un écoulement de gaz à travers elle.

L'invention sera maintenant décrite plus en détail en liaison aux Figures suivantes, qui en représentent certains modes de réalisation à titre purement illustratif :

- la Figure 1 est une vue générale d'un disque aubagé monobloc,
- les Figures 2 et 3 illustrent les significations des angles de flèche de dièdre,
- les Figures 4 et 5 donnent des courbes d'angles typiques de l'invention,
- et les Figures 6, 7 et 8 sont trois vues représentatives d'une aube.

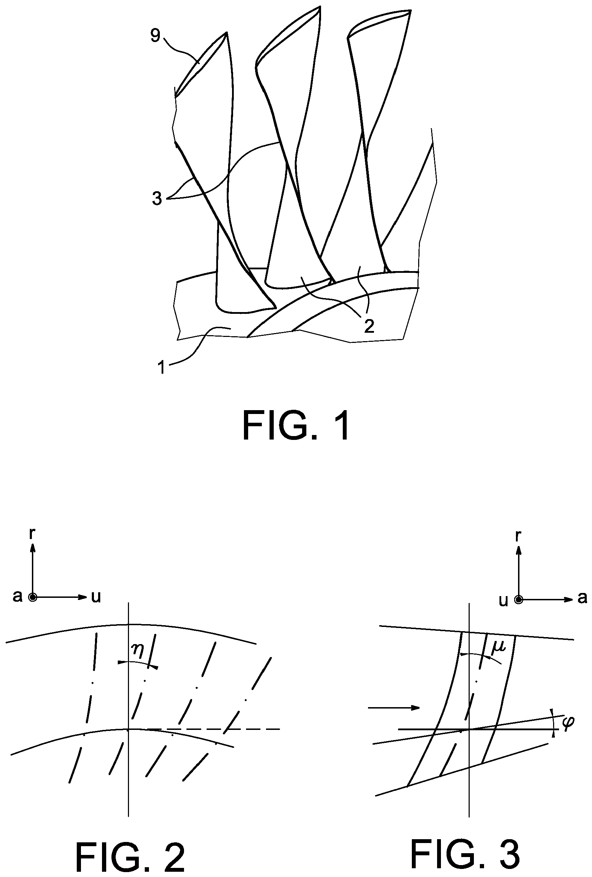

La Figure 1 représente partiellement un disque aubagé monobloc, composé d'un moyeu (1), d'un tenant avec un cercle d'aubes (2) réparties sur son pourtour. Un tel disque peut remplacer un étage d'aubes tournantes ordinaire dans une turbomachine, et on pourra envisager de le placer comme soufflante à l'entrée de la machine, comme premier étage du compresseur à basse pression.

On s'intéressera aux angles dits de flèche et de dièdre des aubes (2) à leur bord d'attaque. Ces angles mesurent les différences des directions entre l'écoulement et les aubes (2), en projection respectivement dans un plan radial et axial et un plan axial et tangent à la direction de rotation de la machine. Ils peuvent être exprimés, d'après les notations des Figures 2 et 3, par les équations suivantes, où λ désigne l'angle de flèche, ν l'angle de dièdre ; $\tan \beta = \dfrac{V_u}{V_a}$ et $\tan \varphi = \dfrac{V_r}{V_a}$ , $V_r, V_u$ et $V_a$ étant les composantes en directions radiale, tangentielle et axiale de l'écoulement :

$$\sin \lambda = \frac{\tan \varphi + \tan \mu + \tan\eta \, \tan\beta}{\sqrt{(1 + \tan^2\eta + \tan^2\mu)(1 + \tan^2\beta + \tan^2\varphi)}}$$

$$\sin \nu = \frac{\sec \varphi \, \tan \eta - \tan \beta (\sin\varphi + \cos \varphi \, \tan\mu)}{\sqrt{(1 - \tan\varphi \, \tan\mu)^2 + (\tan\beta - \tan\varphi \, \tan\eta)^2 + (\tan\eta - \tan\beta \tan\mu)^2}}$$

Si l'écoulement est purement axial, ce qui est à peu près le cas à l'entrée de la machine, l'angle de flèche exprime l'inclinaison de l'aube en direction axiale, et l'angle de dièdre, l'inclinaison de l'aube en direction tangentielle. Un signe négatif de l'angle de flèche exprime une inclinaison vers l'amont, et un signe positif, vers l'aval ; et un signe négatif de l'angle de dièdre exprime une inclinaison vers l'intrados, et un signe positif, vers l'extrados. Les inclinaisons sont définies à partir de direction radiales vers l'extérieur.

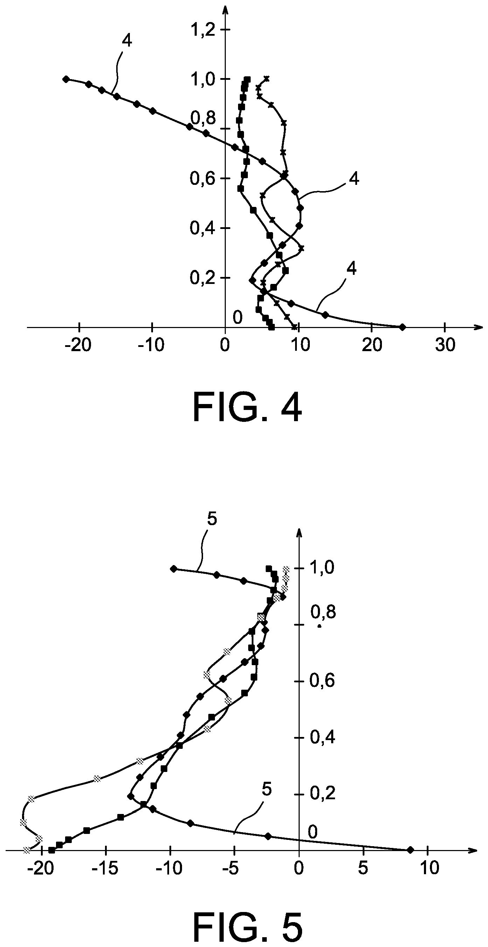

Les Figures 4 et 5 illustrent les angles de flèche et de dièdre respectivement du bord d'attaque (3) d'une aube (2) d'après l'invention, aux courbes (4) et (5), les autres courbes étant données à titre illustratif et représentant diverses conceptions d'aubes existantes. Les abscisses des courbes représentent les valeurs des angles, et les ordonnées les valeurs relatives des rayons de l'aube (2), de (0%) au raccordement au moyeu ou pied à (100%) au bord libre ou sommet de l'aube (2). En ce qui concerne l'angle de flèche, on voit que, du sommet au pied, il est d'abord négatif mais continument croissant, qu'il devient positif vers 75% de la hauteur tout en continuant de croître, qu'il atteint un maximum de 10° environ vers 45%, puis décroît tout en restant positif, atteint un minimum de 4° environ à environ 20% de la hauteur, puis, une zone de pied étant atteinte, qu'il se remet à croître continument, de plus en plus fortement et jusqu'à atteindre une valeur de 25° environ au raccordement au moyeu (1). Alors que cette courbe (4) ne se distingue pas nécessairement d'autres entre les hauteurs de 100% et 20%, la zone de pied entre la hauteur 20% et 0% est nettement originale, les autres courbes révélant soit peu de changement de l'angle de flèche à cet endroit, ou au contraire une décroissance de l'angle pour l'une d'entre elles. Une croissance de l'angle de flèche de 10° au moins entre les extrémités de la zone de pied (ici de 21° = 25° - 4° environ) caractérise l'invention. L'effet principal de la caractéristique de l'invention est d'assurer une répartition de débit d'écoulement des gaz optimale sur la hauteur de l'aube (2), ce qui accroît le rendement et facilite le bon fonctionnement du moteur.

La Figure 5 montre que l'angle de dièdre de l'aube (2) est négatif près du bord libre, avec des valeurs décroissant peu à peu en descendant vers le pied, puis en décroissant plus fortement sous une hauteur de 70% environ jusqu'à atteindre un minimum (de -13° environ) à une hauteur de 20% environ ; mais à partir de cette hauteur, l'angle de dièdre croît vers le raccordement au moyeu (1), et ici aussi de plus en plus vite, jusqu'à atteindre des valeurs positives à une hauteur de 5% environ et un angle maximal positif (de 8° environ) au raccordement au moyeu (1). Ici encore la zone de pied est tout à fait originale par rapport aux conceptions existantes, qui révèlent des évolutions différentes de l'angle de dièdre, mais sa persistance dans tous les cas à des valeurs négatives et inférieures à celle qu'on observait au sommet de l'aube. Une croissance de l'angle de dièdre d'au moins 10° entre les extrémités de la zone de pied (ici de 21° = 13° + 8° environ) caractérise l'invention. La zone de pied commence à l'inflexion de la courbe de l'angle considéré, et sa hauteur peut différer pour les deux courbes, mais elle est au plus égale à 30% de la hauteur totale de l'aube (2) environ. Le profil caractéristique du bord d'attaque (3) dans la région de pied assure ici un renforcement des aubes (2) en maintenant des contraintes mécaniques acceptables au raccordement au moyeu (1).

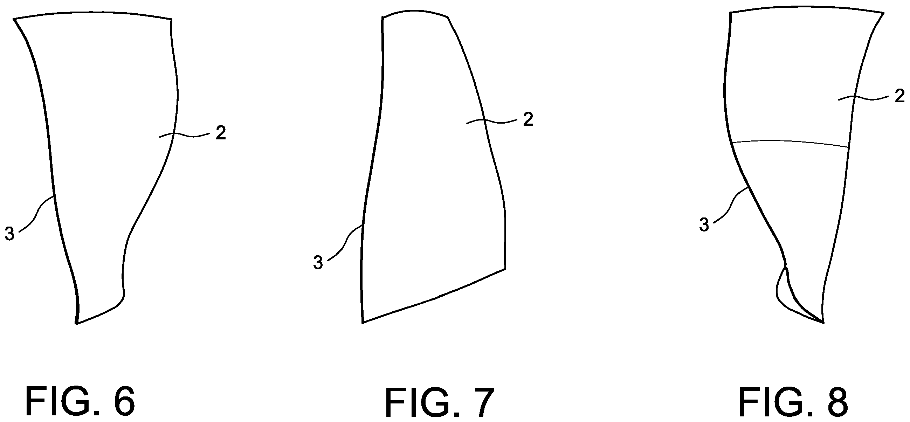

On se reporte aux Figures 6, 7 et 8 qui illustrent l'aube (2) en vues de côté, de l'avant et de l'arrière: la Figure 6 permet d'apprécier l'influence de l'angle de flèche, le bord d'attaque (3) étant à peu près rectiligne dans cette vue dans la région de pied, puis s'infléchissant pour former une concavité dans les régions supérieures de l'aube ; et les Figures 7 et 8 représentent nettement le changement de direction de courbure du bord d'attaque (3) dans la région de pied, qui distingue l'invention des conceptions existantes exposées ici.

**Revendications**

1. Disque aubagé monobloc pour turbomachine composé d'un moyeu (1) et d'aubes (2) reliées d'un tenant au moyen, où les bords d'attaque des aubes ont, dans une zone de pied adjacente au moyeu et s'étendant sur environ 20% à 30% de la hauteur de l'aube, un angle de dièdre et un angle de flèche (4) ayant des valeurs croissant continûment toutes deux et **caractérisé en ce que** l'accroissement des valeurs est d'au moins 10° en s'approchant du moyeu.

2. Disque aubagé monobloc suivant la revendication 1, **caractérisé en ce que** l'angle de flèche et l'angle de dièdre ont des valeurs décroissant continûment dans une zone médiane de l'aube, adjacente à la zone de pied, en s'approchant du moyeu.

3. Disque aubagé monobloc suivant l'une quelconque des revendications 1 ou 2, **caractérisé en ce que** l'angle de dièdre est toujours négatif, sauf à une portion de la zone de pied qui est la plus proche du moyeu.

4. Disque aubagé monobloc suivant la revendication 1, **caractérisé en ce que** l'angle de flèche a des valeurs toujours positives dans une zone médiane de l'aube, et a des valeurs supérieures à toutes celles de la zone médiane dans une portion de la zone de pied qui est la plus proche du moyeu.

5. Disque aubagé monobloc suivant la revendication 4, **caractérisé en ce que** l'angle de flèche atteint une valeur maximale d'au moins deux fois les valeurs dans la portion médiane au raccordement au moyeu.

6. Disque aubagé monobloc suivant la revendication 5, **caractérisé en ce que** la valeur maximale est de 20° au moins.

7. Disque aubagé monobloc suivant la revendication 3, **caractérisé en ce que** ladite portion de la zone de pied s'étend sur 5% à 10% de la hauteur de l'aube.

8. Disque aubagé monobloc suivant l'une quelconques des revendications 4, 5 ou 6, **caractérisé en ce que** ladite portion de la zone de pied s'étend sur 10% à 20% de la hauteur de l'aube.

9. Turbomachine, **caractérisée en ce qu'**elle comporte un disque aubagé monobloc suivant l'une quelconque des revendications précédentes.

10. Turbomachine suivant la revendication 9, **caractérisé en ce que** le disque aubagé monobloc forme une soufflante de compresseur tout en amont d'un écoulement de gaz à travers la turbomachine.

**Patentansprüche**

1. Einstückige beschaufelte Scheibe für eine Turbomaschine, die aus einer Nabe (1) und aus Schaufeln (2), welche mit der Nabe einstückig verbunden sind, besteht, wobei die Eintrittskanten der Schaufeln in einem Fußbereich, der zu der Nabe benachbart ist und der sich über etwa 20 % bis 30 % der Höhe der Schaufel erstreckt, einen Diederwinkel und einen Pfeilungswinkel (4) mit Werten, die beide kontinuierlich zunehmen, aufweisen, und **dadurch gekennzeichnet, dass** die Zunahme der Werte in Annäherung an die Nabe wenigstens 10° beträgt.

2. Einstückige beschaufelte Scheibe nach Anspruch 1, **dadurch gekennzeichnet, dass** der Pfeilungswinkel und der Diederwinkel Werte aufweisen, die in einem Mittelbereich der Schaufel, benachbart zu dem Fußbereich, in Annäherung an die Nabe kontinuierlich abnehmen.

3. Einstückige beschaufelte Scheibe nach einem der Ansprüche 1 oder 2, **dadurch gekennzeichnet, dass** der Diederwinkel bis auf einen Abschnitt des Fußbereiches, welcher der Nabe am nächsten gelegen ist, stets negativ ist.

4. Einstückige beschaufelte Scheibe nach Anspruch 1, **dadurch gekennzeichnet, dass** der Pfeilungswinkel in einem Mittelbereich der Schaufel stets positive Werte aufweist und in einem Abschnitt des Fußbereiches, welcher der Nabe am nächsten gelegen ist, Werte aufweist, die größer als all diejenigen des Mittelbereiches sind.

5. Einstückige beschaufelte Scheibe nach Anspruch 4, **dadurch gekennzeichnet, dass** der Pfeilungswinkel einen maximalen Wert von wenigstens dem Zweifachen der Werte in dem Mittelabschnitt an der Verbindung mit der Nabe erreicht.

**6.** Einstückige beschaufelte Scheibe nach Anspruch 5, **dadurch gekennzeichnet, dass** der maximale Wert wenigstens 20° beträgt.

**7.** Einstückige beschaufelte Scheibe nach Anspruch 3, **dadurch gekennzeichnet, dass** der Abschnitt des Fußbereiches sich über 5 % bis 10 % der Höhe der Schaufel erstreckt.

**8.** Einstückige beschaufelte Scheibe nach einem der Ansprüche 4, 5 oder 6, **dadurch gekennzeichnet, dass** der Abschnitt des Fußbereiches sich über 10 % bis 20 % der Höhe der Schaufel erstreckt.

**9.** Turbomaschine, **dadurch gekennzeichnet, dass** sie eine einstückige beschaufelte Scheibe nach einem der vorhergehenden Ansprüche umfasst.

**10.** Turbomaschine nach Anspruch 9, **dadurch gekennzeichnet, dass** die einstückige beschaufelte Scheibe ein Verdichtergebläse ganz stromauf einer Gasströmung durch die Turbomaschine bildet.

## Claims

**1.** A one-block bladed disk for a turbine engine, consisting of a hub (1) and of blades (2) connected in one-piece to the hub, wherein the leading edges of the blades, in a foot area adjacent to the hub and extending over about 20% to 30% of the height of the blade, have a dihedral angle and a sweep angle (4) having values both increasing continuously and **characterized in that** the increase of said values is at least 10° upon approaching the hub.

**2.** The one-block bladed disk according to claim 1, **characterized in that** the sweep angle and the dihedral angle have values decreasing continuously in the median area of the blade, adjacent to the foot area, upon approaching the hub.

**3.** The one-block bladed disk according to any of claims 1 or 2, **characterized in that** the dihedral angle is always negative, except at a portion of the foot area which is the closest to the hub.

**4.** The one-block bladed disk according to claim 1, **characterized in that** the sweep angle has always positive values in a median area of the blade, and has greater values than all those of the median area in a portion of the foot area which is the closest to the hub.

**5.** The one-block bladed disk according to claim 4, **characterized in that** the sweep angle attains a maximum value of at least twice the values in the medium portion at the connection to the hub.

**6.** The one-block bladed disk according to claim 5, **characterized in that** the maximum value is of at least 20°.

**7.** The one-block bladed disk according to claim 3, **characterized in that** said portion of the foot area extends over 5% to 10% of the height of the blade.

**8.** The one-block bladed disk according to any of claims 4, 5 or 6, **characterized in that** said portion of the foot area extends over 10% to 20% of the height of the blade.

**9.** A turbine engine, **characterized in that** it includes a one-block bladed disk according to any of the preceding claims.

**10.** The turbine engine according to claim 9, **characterized in that** the one-block bladed disk forms a compressor fan fully upstream from a gas flow through the turbine engine.

FIG. 1

FIG. 2

FIG. 3

FIG. 4

FIG. 5

FIG. 6

FIG. 7

FIG. 8

EP 2 764 212 B1

**EP 2 764 212 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100054946 A
- EP 1505302 A